# EUROPÄISCHE PATENTSCHRIFT

(11) **EP 0 788 610 B1**
(45) Veröffentlichungstag und Bekanntmachung des Hinweises auf die Patenterteilung: **17.11.1999**
(21) Anmeldenummer: 95933424.4
(22) Anmeldetag: 23.09.1995
(51) Int. Cl.: G01T 1/36, G21K 1/06

(54) **SPEKTROMETER FÜR RÖNTGENSTRAHLUNG**
X-RAY SPECTROMETER
SPECTROMETRE A RAYONS X

(30) Priorität: 27.10.1994 DE 4438361
(43) Veröffentlichungstag der Anmeldung: 13.08.1997
(73) Patentinhaber: Forschungszentrum Karlsruhe GmbH, 76133 Karlsruhe (DE)
(72) Erfinder: JAKOBI, Waldemar, / (DE); SCHULTHEISS, Christoph, D-76149 Karlsruhe (DE)
(74) Vertreter: Rückert, Friedrich, Dr.
(86) Internationale Anmeldenummer: EP9503775
(87) Internationale Veröffentlichungsnummer: WO9613734

(56) Entgegenhaltungen:
- WO-A-92/09088
- WO-A-94/06046
- US-A- 5 001 737
- US-A- 5 192 869

## Beschreibung

Die Erfindung betrifft ein Spektrometer für Röntgenstrahlung gemäß Anspruch 1.

Es ist aus Lehrbüchern der Physik [z. B. Christian Gerthsen: "Physik", neunte Auflage, Springer-Verlag Berlin, Heidelberg, New York (1966), Seiten 404 ff.] bekannt, daß ein Röntgenstrahl (Wellenlänge ca. 10 - 8 cm) beim Auftreffen unter flachem Winkel (z. B. 10') auf einem Strichgitter (z. B. 200 Striche/mm) unter Beugung reflektiert wird. Weiterhin ist bekannt, daß Strahlung beim Durchtritt durch eine Blende gebeugt wird, wobei die Beugung von der Wellenlänge der Strahlung abhängig ist.

Aus Rev. Sci. Instrum. 58 (1), 1987, S. 43/44 ist ein Spektrometer für Röntgenstrahlung bekannt, das aus einer für die Röntgenstrahlung undurchlässigen Scheibe, die mit einer Vielzahl von Kanälen versehen ist, besteht.

Aus Nuclear Instruments an Methods in Physics Research B82, 1993, S. 121-124 ist ein Spektrometer für Röntgenstrahlung, bestehend aus einer für die Röntgenstrahlung undurchlässigen gewölbten Scheibe mit einer konvexen und einer konkaven Oberfläche, die mit einer Vielzahl von Kanälen (Kapillaren) versehen ist, die auf einen gemeinsamen Punkt weisen, bekannt.

Aufgabe der Erfindung ist, ein weiteres Spektrometer vorzuschlagen, mit dessen Hilfe ein Spektrum von Röntgenstrahlung erhalten wird.

Die Aufgabe wird erfindungsgemäß durch das in Anspruch 1 beschriebene Spektrometer gelöst. Der abhängige Anspruch beschreibt eine bevorzugte Ausgestaltung des Spektrometers.

Ein Bestandteil des erfindungsgemäßen Spektrometers ist eine gewölbte, für Röntgenstrahlung an sich undurchlässige Scheibe, die eine Vielzahl von Kanälen mit maximal 50 µm Durchmesser enthält, die so angeordnet sind, daß sie auf eine gemeinsame Linie oder auf einen gemeinsamen Punkt weisen. Wegen der Wölbung weist die Scheibe eine konkave und eine konvexe Oberfläche auf. Die gemeinsame Linie oder der gemeinsame Punkt liegen der konkaven Oberfläche der Scheibe gegenüber. Die Dicke der Scheibe kann unterhalb 1 cm, bei weicher Röntgenstrahlung sogar unterhalb 1 mm liegen.

Überraschenderweise hat es sich gezeigt, daß die Kanäle einer solchen Scheibe nur für einen einzigen Wellenlängenbereich einer kontinuierlichen Röntgenstrahlung durchlässig sind. Welcher Wellenlängenbereich der kontinuierlichen Röntgenstrahlung das Spektrometer passiert, hängt vom Maß der Wölbung des Spektrometers ab. Trifft auf die konvexe Oberfläche der Scheibe ein paralleler Röntgenstrahl mit kontinuierlicher Wellenlänge auf, ist die Scheibe bei vorgegebener Wölbung nur für Strahlung eines bestimmten Wellenlängenbereichs durchlässig, während die anderen Wellenlängenbereiche absorbiert werden. Die Strahlung des Wellenlängenbereichs, der die Scheibe durchstrahlt, wird auf der gemeinsamen Linie oder im gemeinsamen Punkt fokussiert. Eine zusätzliche Einrichtung, mit deren Hilfe die Wölbung der Scheibe verändert werden kann, eröffnet damit die Möglichkeit, nacheinander einzelne Wellenlängenbereiche auf der konkaven Seite der gewölbten Scheibe zu fokussieren.

Das Material der Scheibe soll für Röntgenstrahlung undurchlässig sein. Generell wird diese Bedingung von Glas erfüllt. Für weiche Röntgenstrahlung sind Kunststoffe wie z. B. Polycarbonat geeignet.

Die Scheibe kann in einer ersten Ausführungsform in der Weise gewölbt sein, daß sie einen Teil der Mantelfläche eines Zylinders bildet, so daß ihr Querschnitt einen Teil eines Kreises, z. B. ein Drittel oder Viertel eines Kreises, darstellt. Die Känäle weisen in diesem Fall auf eine gemeinsame Linie, nämlich die Achse des Zylinders und sind senkrecht zur Scheibe angeordnet. Mittels der Einrichtung wird in diesem Fall bewirkt, daß sich der Zylinderdurchmesser ändert. In einer zweiten, verbesserten Ausführungsform ist die Scheibe in der Weise gewölbt, daß alle Kanäle auf einen gemeinsamen Punkt, den Brennpunkt, weisen. In diesem Fall bildet die konkave Seite eine radialsymmetrische Vertiefung, während die konvexe Seite eine entsprechende Erhöhung darstellt. Wiederum sind die Kanäle senkrecht zur Scheibe angeordnet. Das Ausmaß der Vertiefung wird durch die Einrichtung eingestellt.

Um das Spektrum einer kontinuierlichen Röntgenstrahlung zu erhalten, muß somit die Wölbung der Scheibe verändert werden, damit jeweils ein anderer Wellenlängenbereich auf der konkaven Seite erfaßt werden kann. Die Änderung der Wölbung vollzieht sich mit Hilfe der Einrichtung in der Weise, daß sich die gemeinsame Linie oder der gemeinsame Punkt verschiebt. Die Verschiebung erfolgt entlang einer Linie, die durch die Normale zur Fläche der Tangenten am Scheitelpunkt oder an der Scheitellinie der konvexen Oberfläche der Scheibe gegeben ist.

In beiden genannten Ausführungsformen ist die Scheibe vorzugsweise in der Weise gewölbt, daß die Tangente an ihrem Rand mit der Tangentenfläche an ihrem Scheitelpunkt einen Winkel im Bereich zwischen 3° und 20° einschließt. Diese Winkelangabe wurde für ein Spektrometer aus Polycarbonat abgeleitet.

Die Zahl der Kanäle und ihr Durchmesser bestimmt die Durchlässigkeit des Spektrometers für die zu fokussierende Strahlung. Die Absorption von auf das Spektrometer fallender Strahlung ist abhängig vom Gesamtverhältnis der Flächen der offenen und der geschlossenen Bereiche. Je höher die Gesamtfläche der Kanaleintrittsöffnungen und damit der offenen Bereiche ist, desto durchlässiger ist das Spektrometer. Die Kanäle sollen einen Durchmesser von weniger als 50 µm aufweisen. Besser geeignet erscheinen kleinere Durchmesser, etwa von 10 µm und weniger. Optimale Eigenschaften werden bei einem Kanaldurchmesser von weniger als 1 µm, etwa von 0,1 µm, erwartet. Um die Absorption der Strahlung durch das strahlenundurchlässige Material der Scheibe zu vermindern, muß in diesem Fall die Zahl der Kanäle entsprechend vergrößert werden.

Das erfindungsgemäße Spektrometer läßt sich ausgehend von einer planaren, für Röntgenstrahlung undurchlässigen Scheibe herstellen. Die planare Scheibe wird mit einer Vielzahl von durchgehenden, zueinander parallelen Kanälen versehen, die senkrecht zur Ebene der planaren Scheibe verlaufen und maximal 50 µm im Durchmesser messen. Eine Vielzahl sehr feiner Kanäle läßt sich herstellen, indem die planare Scheibe einem parallelen, senkrecht auf die planare Scheibe auftreffenden Ionenstrahl ausgesetzt wird, der die planare Scheibe durchdringt. Die Anordnung der einzelnen Kanäle ist beliebig; ein bestimmtes Muster braucht nicht vorgegeben werden.

Andererseits hat es sich gezeigt, daß planare Scheiben mit einer Vielzahl von zueinander parallelen, senkrecht zur Scheibenebene verlaufenden Kanälen zum Zweck der Filtration von Flüssigkeiten bereits kommerziell angeboten werden. Geeignet zur Herstellung eines Spektrometers für weiche Röntgenstrahlung erweisen sich z. B. Filterplättchen aus Polycarbonat mit einer Vielzahl von Poren, wie sie unter der Bezeichnung "Nucleopore^{R} Polycarbonate Membrane" im Fachhandel angeboten werden. Sie messen ca. 4,5 cm im Durchmesser und sind ca. 0,01 mm dick. Sie enthalten durchgehende Poren mit einem Porendurchmesser von 12 µm bis 0,015 µm und eine Porendichte von 10⁵ bis 6·10⁸ Poren/cm².

Mit Hilfe der Einrichtung wird die planare Scheibe in der beschriebenen Weise gewölbt, wobei das Maß der Wölbung einstellbar ist.

Sollen als Spektrometer Filterplättchen verwendet werden, können sie in eine Öffnung eines evakuierbaren Behälters eingesetzt werden, wonach der Behälter permanent durch eine Pumpe evakuiert wird. Bei ausreichender Pumpleistung wölbt sich das Filterplättchen symmetrisch in Richtung des Behälterinnenraums, wobei das Maß der Wölbung von der Pumpleistung abhängig ist. Wenn das Spektrometer keinen Brennpunkt, sondern eine Brenn"linie" aufweisen soll, ist es bei biegsamen planaren Scheiben ausreichend, die planare Scheibe in der Weise in eine Fixier- und Spanneinrichtung einzuspannen, daß sie einen Teil der Mantelfläche eines Zylinders bildet, wobei der Zylinderdurchmesser einstellbar ist.

Die Erfindung wird im folgenden anhand von Durchführungsbeispielen und Figuren näher erläutert.

Es zeigen:
Fig. 1 die Versuchsanordnung;
Fig. 2 schematisch das verwendete Spektrometer;
Fig. 3a und 3b Intensitätsdiagramme.

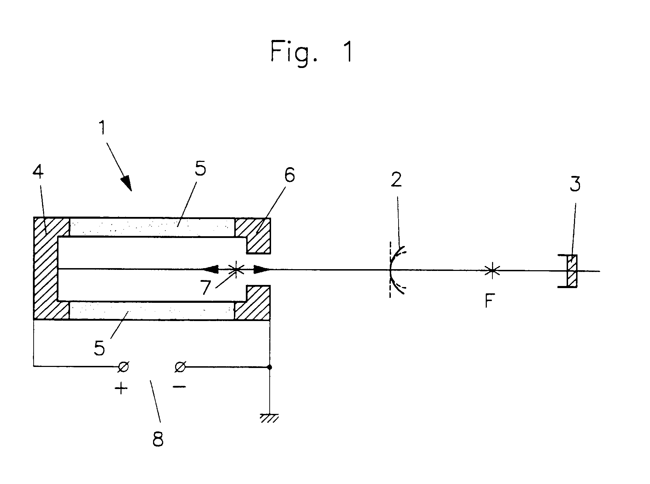

Fig. 1 stellt die Versuchsanordnung dar, mit deren Hilfe die nachfolgend beschriebenen Versuche durchgeführt wurden. Die Versuchsanordnung besteht aus einer Vorrichtung 1 zur Emission weicher Röntgenstrahlung, dem Spektrometer 2 und einem PIN-Detektor (PIN-Diode) 3 zur Bestimmung der Intensität der Röntgenstrahlung. Die Vorrichung 1 besteht in bekannter Weise aus einer Anode 4 und einer Kathode 6, die durch ein Dielektrikum 5 voneinander getrennt sind. An die Anode 4 und die Kathode 6 ist eine einstellbare Hochspannung 8 mit U ≥ 10 bis 20 kV angelegt. Durch die Vorrichtung 1 wird eine gepulste weiche Röntgenstrahlung mit Eτ = 100 eV bis 500 eV und einer Pulsdauer von ca. 500 ns erzeugt, die vom Punkt 7 ausgeht. Die Kathode 6 bildet eine Blende mit einem Durchmesser von 10 mm. Der Punkt 7 ist ca. 50 mm von der Blendenöffnung entfernt. Die Versuchsanordnung wird unter einem Druck von P ≈ 10⁻³ mbar gehalten. Die Intensität der von der Vorrichtung 1 emittierten Röntgenstrahlung hängt vom Material der Anode 4 und Kathode 6, deren Geometrie sowie von der angelegten Spannung ab.

Als Spektrometer 2 wird ein Filterplättchen eingesetzt, das unter der Bezeichnung "Nucleopore^{R} Polycarbonate Membrane" im Fachhandel erhältlich ist. Das Filterplättchen besteht aus einer planaren Scheibe mit 4,5 cm Durchmesser und 0,01 mm Dicke. Vom Hersteller wird angegeben, daß der Porendurchmesser 10 µm und die Porendichte 1·10⁵ Poren/cm² betragen. Die Poren stellen durchgehende Kanäle dar. Mit Hilfe einer (nicht dargestellten) Einrichtung wird das Filterplättchen gewölbt, wobei das Maß der Wölbung einstellbar ist. Die Wölbung erfolgt in allen Fällen in der Weise, daß das Filterplättchen im Querschnitt eine stetig gebogene Linie darstellt. Anstatt einem Brennpunkt wird bei im Querschnitt kreisförmiger Wölbung eine Brenn"linie" erhalten, die mit "F" bezeichnet ist.

Zur Halterung des Spektrometers 2 wurde ein kleiner Randabschnitt des Spektrometers eingeklemmt. Außerdem wurde das Spektrometer 2 seitlich durch einen Drahtbügel fixiert. Der dem eingeklemmten Randabschnitt gegenüberliegende Randabschnitt wurde von einem weiteren Drahtbügel gehalten, der mit Hilfe einer Mikrometerschraube in Richtung auf den eingeklemmten Randabschnitt verschiebbar war, so daß das Spektrometer 2 durch Eindrehen der Mikrometerschraube in zunehmendem Maß gewölbt werden konnte. Mit Hilfe der Mikrometerschraube können die Stellungen 0 mm bis 8 mm eingestellt werden. Die Stellung 8 mm entspricht einer sehr schwachen Wölbung. Durch das Eindrehen der Mikrometerschraube auf die Stellungen 7 mm bis 0 mm wird eine zunehmende Wölbung des Spektrometers 2 erzeugt. In Stellung 0 mm nimmt das Spektrometer 2 die am stärksten gewölbte Form an. Die Stellungen 0 bis 8 mm der Mikrometerschraube wurden in den folgenden Intensitätsdiagrammen mit "Q" bezeichnet.

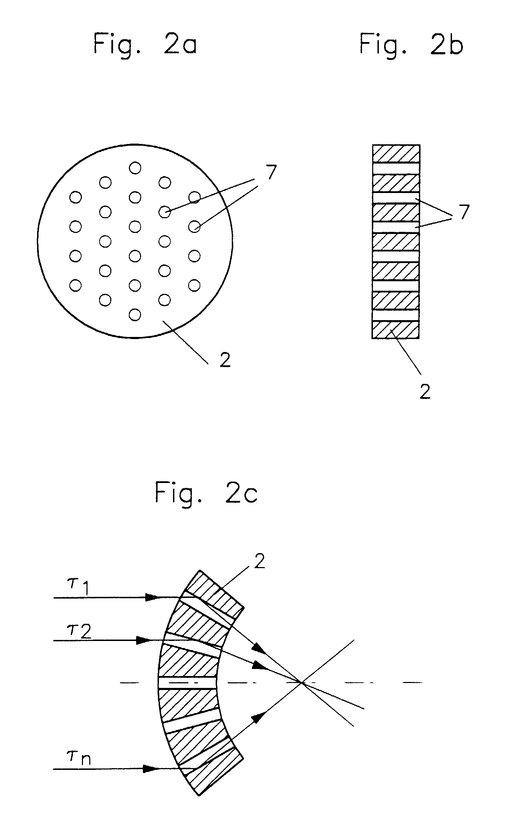

Fig. 2 zeigt schematisch das Filterplättchen in planarer Form in Aufsicht (Teil a) und und Querschnittsdarstellung (Teil b) sowie in gewölbter Form (Teil c). Die Wölbung entspricht dem oben genannten und in der Figur (Teil c) dargestellten Fall, daß das gewölbte Filterplättchen auf der Mantelfläche eines Zylinders liegt. Das Filterplättchen ist mit einer Vielzahl von durchgehenden Poren (Kanäle 7) versehen. Der angenommene Strahlverlauf der das Filterplättchen durchdringenden Strahlung ist in Teil c dargestellt. An der inneren Oberfläche der durchgehenden Kanäle 7 findet eine Reflexion der von links einfallenden, mit τₙ (n = 1 ... n) bezeichneten Strahlen statt.

Strenggenommen weisen die Verlängerungen der Kanäle nicht exakt auf die mit "F" bezeichnete Linie, weil an ihrer inneren Oberfläche eine Reflexion stattfindet. Insbesondere bei sehr kleinen Kanaldurchmessern kann die Strahlabweichung infolge der Reflexion für praktische Zwecke vernachlässigt werden. In der Praxis werden die Strahlen τₙ daher bei sehr kleinen Kanaldurchmessern auf der gemeinsamen Linie (der Zylinderachse) fokussiert, auf der sich die die Verlängerungen der Kanäle auf der konkaven Seite des Filterplättchens schneiden. Bei größeren Kanaldurchmessern liegt infolge der Reflexion der Strahlung an den Innenwänden der Kanäle der Brennpunkt der Strahlung näher an dem Spektrometer als der Schnittpunkt der Verlängerungen der Kanäle, wie aus Teil c abgeleitet werden kann.

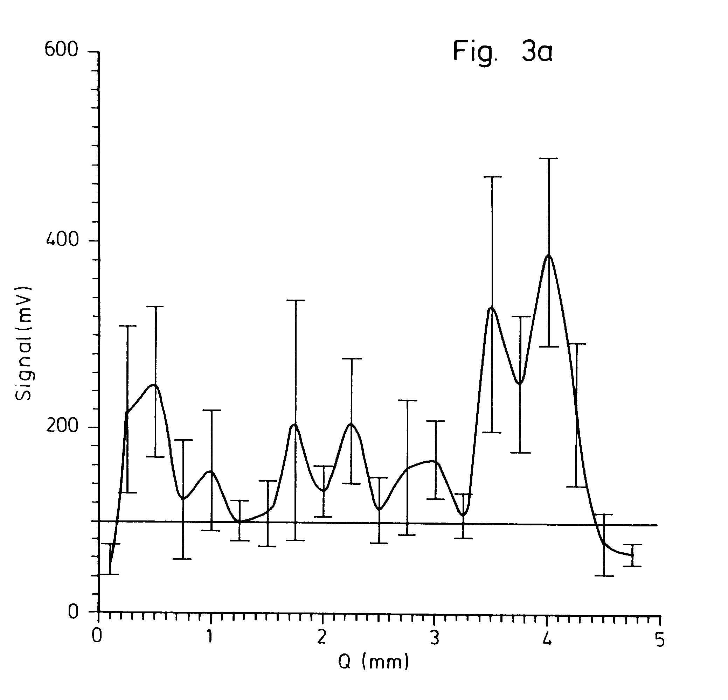

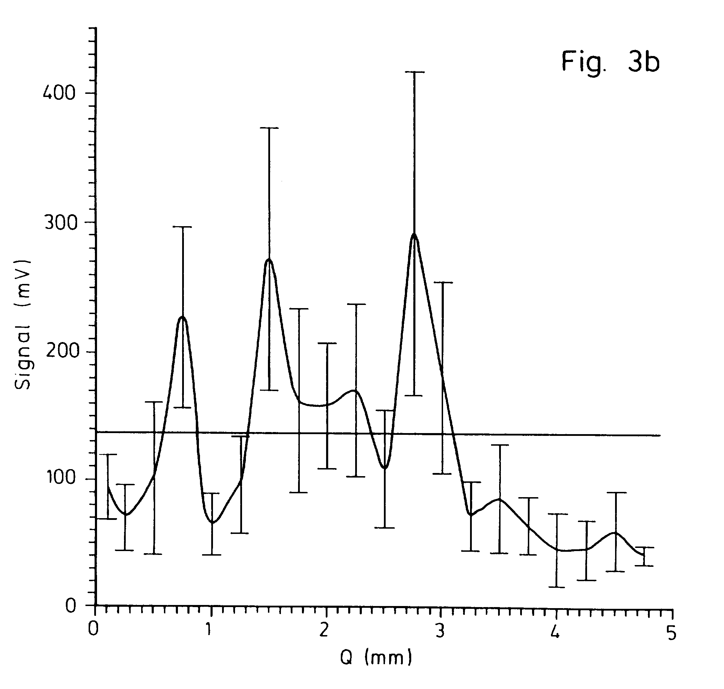

Die Versuchsergebnisse mit der beschriebenen Anordnung sind in den folgenden Figuren 3a und 3b dargestellt.

Fig. 3a zeigt die mit der PIN-Diode 3 gemessenen Intensitäten in [mV] in Abhängigkeit von der Stellung der Mikrometerschraube Q in [mm]. Die stärkste Wölbung des Spektrometers 2 ergibt sich wie erwähnt bei Q = 0 mm und die schwächste Wölbung bei Q = 5 mm. Bei diesem Versuch wurde eine Kathode aus Cu-64 und eine Anode aus Fe-56 eingesetzt. Der Abstand zwischen dem Scheitelpunkt des Spektrometers 2 und der PIN-Diode 3 betrug in Strahlrichtung 320 mm. Die PIN-Diode trug eine 5 µm dicke Aluminiumfolie, die nur für Röntgenstrahlung durchlässig ist. Die Hochspannung 8 wurde auf U = 18 kV gehalten.

Im Diagramm gemäß Fig. 3 ergibt sich ohne Spektrometer 2 eine waagrechte Linie. Deutliche Intensitätsänderungen wurden dagegen mit Spektrometer 2 erhalten. Die Intensitätsänderungen sind von der Stellung Q der Mikrometerschraube und damit von der Wölbung des Spektrometers 2 abhängig. In Fig. 3a sind die bei der jeweiligen Stellung der Mikrometerschraube gemessenen Intensitätswerte mit Fehlerbalken bezeichnet. Es sind mehrere Maxima zu erkennen. Es ist offensichtlich, daß die Röntgenstrahlung bei einzelnen Stellungen der Mikrometerschraube gebündelt und damit durch das Spektrometer 2 beeinflußt wird. Ein erstes Maximum wird z. B. bei relativ schwacher Wölbung des Spektrometers 2, nämlich bei Q ≈ 4 mm erhalten. Schwächere Maxima ergeben sich bei stärkerer Spektrometerwölbung und entsprechend kleineren Stellungen der Mikrometerschraube. Bei geringer Wölbung (Q im Bereich zwischen 5 und 4,5) liegen die beobachteten Intensitätswerte unter denen, die ohne Spektrometer gemessen wurden. Dies kann auf die Absorption der Strahlung durch das Spektrometer zurückgeführt werden. Da ein kontinuierliches Röntgenspektrum vorliegt, durchdringt nur die Strahlung eines Wellenlängenbereichs die gewölbte Scheibe. Die Maxima werden als Röntgenspektrum der von der Kupferkathode emittieren Röntgenstrahlung interpretiert.

Fig. 3b zeigt ein zu Fig. 3a analoges Diagramm bei weitgehend unveränderter Versuchsanordnung. Die Vorrichtung 1 enthielt jedoch im Gegensatz zum oben beschriebenen Versuch sowohl eine Kathode als auch eine Anode aus Eisen. Wiederum wurde ohne Spektrometer 2 im Diagramm eine waagrechte Linie erhalten. Beim Versuch mit Spektrometer 2 wurden die erhaltenen Intensitäten mit den Fehlerbalken bezeichnet. Der Fokussiereffekt des Spektrometers 2 zeigt sich in den Maxima der Intensität bei niedriger Stellung Q der Mikrometerschraube (stärkere Wölbung). Die niedrigen Intensitätswerte bei schwach gewölbtem Spektrometer 2 scheinen wiederum auf die Absorption der Strahlung durch des Spektrometers 2 zurückzuführen sein. Eine stärkere Wölbung (Q im Bereich zwischen 1 und 3 mm) ergibt Intensitätswerte, die deutlich über den Intensitätswerten liegen, die ohne Spektrometer 2 (waagrechte Linie) erhalten werden. Die Maxima entsprechen einzelnen Wellenlängenbereichen; sie werden als Röntgenspektrum der von der Eisenkathode emittieren Röntgenstrahlung interpretiert.

## Patentansprüche

1. Spektrometer für Röntgenstrahlung, bestehend aus
a) einer für die Röntgenstrahlung undurchlässigen, gewölbten Scheibe mit einer konvexen und einer konkaven Oberfläche, die mit einer Vielzahl von im Durchmesser maximal 50 µm messenden Kanälen versehen ist, wobei die Kanäle in der Weise angeordnet sind, daß sie von der konvexen zur konkaven Oberfläche der Scheibe verlaufen und ihre Verlängerungen auf eine gemeinsame Linie oder einen gemeinsamen Punkt weisen, wobei die gemeinsame Linie oder der gemeinsame Punkt der konkaven Oberfläche der Scheibe gegenüberliegen, und
b) einer Einrichtung, mit deren Hilfe die sich die Wölbung der Scheibe in der Weise verändern läßt, daß sich der Abstand der gemeinsamen Linie oder des gemeinsamen Punkts zur konkaven Oberfläche ändert.

2. Spektrometer für Röntgenstrahlung nach Anspruch 1 mit einem maximalen Durchmesser der Kanäle von 10 µm.

## Claims

1. Spectrometer for X-radiation, comprising
a) a curved disc, which is impermeable to X-radiation and has a convex surface and a concave surface, said disc being provided with a plurality of channels, which have a maximum diameter of 50 µm, the channels being disposed in such a manner that they extend from the convex surface to the concave surface of the disc, and their extensions point to a common line or a common point, the common line or the common point being situated opposite the concave surface of the disc, and
b) an apparatus, by means of which the curvature of the disc can vary in such a manner that the spacing between the common line or the common point and the concave surface changes.

2. Spectrometer for X-radiation according to claim 1, having a maximum diameter for the channels of 10 µm.

## Revendications

1. Spectromètre à rayons X comprenant :
a) une plaque bombée opaque aux rayons X, ayant une surface convexe et une surface concave, cette plaque étant munie d'un grand nombre de canaux d'un diamètre maximum de 50 µm,
les canaux étant disposés de façon à traverser la plaquette de sa surface convexe à sa surface concave et le prolongement des canaux est dirigé sur une ligne commune ou sur un point commun,
la ligne commune ou le point commun étant en regard de la surface concave de la plaquette et,
b) une installation permettant de modifier la courbure de la plaquette pour changer la distance entre la ligne commune ou le point commun et la surface concave.

2. Spectromètre à rayons X selon la revendication 1, caractérisé en ce que
les canaux ont un diamètre maximum de 10 µm.
